# EUROPEAN PATENT APPLICATION

(11) **EP 1 324 248 A2**
(43) Date of publication of application: **02.07.2003**
(21) Application number: 02028412.1
(22) Date of filing: 18.12.2002
(51) Int. Cl.: G06F 17/60

(54) **Schedule distribution system and schedule making method**

(30) Priority: 25.12.2001 JP 2001391463
(71) Applicant: MATSUSHITA ELECTRIC INDUSTRIAL CO., LTD., Kadoma-shi, Osaka-fu (JP)
(72) Inventor: Koroda, Kousuke, Hiroshima-ken 739-0025 (JP); Saeki, Yuko, Hiroshima-shi, Hiroshima-ken 730-0852 (JP); Ogawa, Noriyuki, Ube-shi, Yamaguchi-ken 755-0051 (JP)
(74) Representative: Gassner, Wolfgang, Dr.

(57) **Abstract**

A method of making a schedule that enables a user to visit a plurality of places such as entertainment spots and sightseeing spots in optimal order based on waiting time at those places, and a schedule distribution system using the method are provided. At each of those places, an information provider apparatus (30) for detecting waiting time is placed in advance. A server (20) collects waiting time at each information provider apparatus 30 at any time . Upon receipt of a schedule distribution request from a mobile communications terminal (10), the server (20) first obtains a current position of the mobile communications terminal (10). The server (20) then calculates traveling time from the current position of the mobile communications terminal (10) to each place (that is, each information provider apparatus (30)). The server then adds the waiting time and the traveling time together for each information provider apparatus (30) to calculate time require for entering the place (information provider apparatus (30)). The server (20) then makes a schedule that enables the user to visit the places (information provider apparatuses (30)) in ascending order of required time.

## Description

### BACKGROUND OF THE INVENTION

### Field of the Invention

The present invention relates to schedule distribution systems and schedule making methods. More specifically, the present invention relates to a method for optimally making a schedule for a user who desires to visit a plurality of places such as entertainment spots and sight-seeing spots in accordance with waiting time at those places and user's intended staying time.

### Description of the Background Art

As is well known, there have been various techniques for making a visiting schedule that enables a user to visit a plurality of places such as entertainment spots or sight-seeing spots in optimal order. In one conventional technique, a visiting schedule is arranged based on traveling time to the places designated by the user as desired and traffic congestion of roads to those places.

In reality, however, people may not be able to enter the desired place immediately upon their visit. At some popular places, people may have to wait some time to enter. Most people cannot know how long they have to wait until they actually get to the place. Upon knowing the fact that they have to wait, people are forced to think about whether to just wait there or move on to another place.

One way to get around the above problem is to directly make a phone call to the places before you go, asking waiting time in order to make a visiting schedule by yourself. In this case, however, you have to contact all of the places you want to go, which is quite burdensome.

Moreover, in the above-mentioned conventional technique for arranging a visiting schedule, a user has to designate in advance all of the places he or she desires to visit, which is also quite burdensome. Still further, in the conventional technique, a visiting schedule is arranged in consideration of only traveling time to the desired places and traffic congestion. Therefore, possible waiting time at those places will affect the schedule.

### SUMMARY OF THE INVENTION

Therefore, an object of the present invention is to provide a schedule making method of collecting waiting time at a plurality of places such as entertainment spots and sightseeing spots and, based on the waiting time, making a schedule that enables a user to visit those places in optimal order, and to provide a schedule distribution system using the above method.

The present invention has the following features to attain the object mentioned above.

A first aspect of the present invention is directed to the schedule distribution system for making a visiting schedule for a plurality of specific places, and distributing the schedule to a predetermined terminal. The schedule distribution system includes: a mobile communications terminal operable to issue a request for distribution of the visiting schedule for the plurality of specific places; a plurality of information provider apparatuses each placed at each of the specific places, the information provider apparatuses operable to transmit a waiting time for entering or using the specific place; and a server operable to collect the waiting time from each of the information provider apparatuses, to make a schedule based on the waiting time, upon the request from the mobile communications terminal, and to distribute the schedule to the mobile communications terminal.

Preferably, each of the information provider apparatuses in the first aspect includes: a number-of-people detector operable to detect the number of people waiting to enter or use the specific place; a waiting time calculator operable to calculate the waiting time required for entering or using the specific place from the number of people detected by the number-of-people detector; and a transmitter operable to transmit the waiting time calculated by the waiting time calculator to the server. The server in the first aspect includes: a first receiver operable to receive the waiting time transmitted from each of the information provider apparatuses; a storage unit operable to store the waiting time received by the first receiver; a second receiver operable to receive a schedule distribution request from the mobile communications terminal; a schedule maker operable to obtain, from the storage unit, a waiting time at each of specific places corresponding to the schedule distribution request received by the second receiver, and to make a visiting schedule for the corresponding specific places in ascending order of time taken before entering or using the corresponding specific places based on the obtained waiting time; and a transmitter operable to transmit the schedule made by the schedule maker to the mobile communications terminal. The mobile communications terminal in the first aspect includes: a request transmitter operable to transmit the schedule distribution request to the server; a receiver operable to receive the schedule made by the server; and a display operable to display the schedule received by the receiver.

Typically, the schedule maker in the first aspect makes a schedule that enables a user to visit the corresponding specific places in ascending order of the waiting time.

With this, based on the waiting time of each specific place, it is possible to make a schedule that enables the user to visit a plurality of specific places in ascending order of the waiting time. Furthermore, the user of the mobile communications terminal can automatically receive the schedule.

Here, the schedule maker in the first aspect may obtain a current position of the mobile communications terminal transmitting the schedule distribution request, further calculate a traveling time from the current position to each of the corresponding specific places, and then make a schedule that enables a user to visit the corresponding specific places in ascending order of a sum of the waiting time and the traveling time.

With this, based on the waiting time at each specific place and the current position of the mobile communications terminal, it is possible to make a schedule that enables the user to visit a plurality of specific places in ascending order in a sum of the waiting time and the traveling time. Furthermore, the user of the mobile communications terminal can automatically receive the schedule.

Still further, the mobile communications terminal in the first aspect may transmit the schedule distribution request including area information indicative of an area where a specific place desired for scheduling is located, and the schedule maker may obtain a waiting time of each of specific places corresponding to the area information from the storage unit, and make the schedule that enables a user to visit the corresponding and desired specific places in ascending order of the waiting time.

With this, based on the waiting time at each specific place and the area information, it is possible to make a schedule that enables the user to visit a plurality of specific places located within a specific area in ascending order of the waiting time. Furthermore, the user of the mobile communications terminal can automatically receive the schedule.

Still further, the mobile communications terminal in the first aspect may transmit the schedule distribution request including area information indicative of an area where a specific place desired for scheduling is located, and obtain a waiting time of each of specific places corresponding to the area information from the storage unit, obtain a current position of the mobile communications terminal transmitting the schedule distribution request, further calculate a traveling time from the current position to each of the corresponding and desired specific places, and make a schedule that enables a user to visit the corresponding and desired specific places in ascending order of a sum of the waiting time and the traveling time.

With this, based on the waiting time at each specific place, the current position of the mobile communications terminal, and the area information, it is possible to make a schedule that enables the user to visit a plurality of specific places located within a specific area in ascending order in a sum of the waiting time and the traveling time. Furthermore, the user of the mobile communications terminal can automatically receive the schedule.

Still further, the mobile communications terminal in the first aspect may transmit the schedule distribution request including user information indicative of an intended staying time at a specific place desired for scheduling. And, the schedule maker may further obtain a waiting time at each of specific places corresponding to the user information from the storage unit, and make a schedule that enables a user to visit the corresponding and desired specific places in ascending order of the waiting time and in consideration of the user information.

With this, based on the user information as well as the waiting time at each specific place, it is possible to make a schedule that enables the user to visit a plurality of specific places in ascending order in the waiting time and also in consideration of a user's own schedule. Furthermore, the user of the mobile communications terminal can automatically receive the schedule.

Still further, the mobile communications terminal in the first aspect may transmit the schedule distribution request including user information indicative of an intended staying time at a specific place desired for scheduling. And, the schedule maker may further obtain a waiting time at each of specific places corresponding to the user information from the storage unit, obtain a current position of the mobile communications terminal transmitting the schedule distribution request, further calculate a traveling time from the current position to each of the corresponding and desired specific places, and make a schedule that enables a user to visit the corresponding and desired specific places in ascending order of a sum of the waiting time and the traveling time and in consideration of the user information.

With this, based on the user information as well as the waiting time at each specific place and the current position of the mobile communications terminal, it is possible to make a schedule that enables the user to visit a plurality of specific places in ascending order in a sum of the waiting time and the traveling time and also in consideration of a user's own schedule. Furthermore, the user of the mobile communications terminal can automatically receive the schedule.

A second aspect of the present invention is directed to a method of making a visiting schedule for a plurality of specific places based on predetermined information given by the specific places. The method includes the steps of: detecting the number of people waiting for entering or using the specific places;
calculating waiting times required to enter or use the specific places; extracting waiting times for specific places corresponding to a schedule making request from the calculated waiting times from the detected number of people; and making a schedule in ascending order of time taken before entering or using the corresponding specific places based on the extracted waiting times.

Typically in the schedule making step of the second aspect, a schedule is made to enable a user to visit the corresponding specific places in ascending order of the waiting time.

With this, based on the waiting time at each specific place, it is possible to make a schedule that enables the user to visit a plurality of specific places in ascending order of the waiting time.

Here, in the schedule making step of the second aspect, a current position of a terminal transmitting the schedule making request may be obtained, a traveling time from the current position to each of the corresponding specific places may be calculated, and a schedule may be made to enable a user to visit the corresponding specific places in ascending order of a sum of the waiting time and the traveling time.

With this, based on the waiting time at each specific place and the current position of the mobile communications terminal, it is possible to make a schedule that enables the user to visit a plurality of specific places in ascending order in a sum of the waiting time and the traveling time.

Furthermore, consider a case where the schedule making request includes area information indicative of an area where a specific place desired for scheduling is located. In this case, in the schedule making step of the second aspect, a waiting time at each of specific places corresponding to the area information may be obtained from the calculated waiting times, and a schedule may be made to enable a user to visit the corresponding and desired specific places in ascending order of the waiting time.

With this, based on the waiting time at each specific place and the area information, it is possible to make a schedule that enables the user to visit a plurality of specific places located within a specific area in ascending order in the waiting time.

Still further, consider a case where the schedule making request includes area information indicative of an area where a specific place desired for scheduling is located. In this case, in the schedule making step of the second aspect, a waiting time at each of specific places corresponding to the area information may be obtained from the calculated waiting times, a current position of a terminal transmitting the schedule making request may be obtained, a traveling time from the current position to each of the corresponding and desired specific places may further be calculated, and a schedule may be made to enable a user to visit the corresponding and desired specific places in ascending order of a sum of the waiting time and the traveling time.

With this, based on the waiting time at each specific place, the current position of the mobile communications terminal, and the area information, it is possible to make a schedule that enables the user to visit a plurality of specific places located within a specific area in ascending order in a sum of the waiting time and the traveling time.

Still further, consider a case where the schedule making request includes user information indicative of an intended staying time at a specific place desired for scheduling. In this case, in the schedule making step of the second aspect, a waiting time at each of specific places corresponding to the user information may further be obtained from the calculated waiting times, and a schedule may be made to enable a user to visit the corresponding and desired specific places in ascending order of the waiting time and in consideration of the user information.

With this, based on the user information as well as the waiting time at each specific place, it is possible to make a schedule that enables the user to visit a plurality of specific places in ascending order in the waiting time and also in consideration of a user's own schedule.

Still further, consider a case where the schedule making request includes user information indicative of an intended staying time at a specific place desired for scheduling. In this case, in the schedule making step of the second aspect, a waiting time at each of specific places corresponding to the user information may further be obtained from the calculated waiting times, a current position of a terminal transmitting the schedule making request may be obtained, a traveling time from the current position to each of the corresponding and desired specific places may further be calculated, and a schedule may be made to enable a user to visit the specific places in ascending order of a sum of the waiting time and the traveling time and in consideration of the user information.

With this, based on the user information as well as the waiting time at each specific place and the current position of the mobile communications terminal, it is possible to make a schedule that enables the user to visit a plurality of specific places in ascending order in a sum of the waiting time and the traveling time and also in consideration of a user's own schedule.

A third aspect of the present invention is directed to a server that generates a visiting schedule for a plurality of specific places based on waiting times at the specific places to enter or use, the waiting times transmitted from a plurality of information provider apparatuses each placed in each of the specific places. The server includes: a first receiver operable to receive the waiting times transmitted from the information provider apparatuses; a storage unit operable to store the waiting times received by the first receiver; a second receiver operable to receive a schedule distribution request from a predetermined terminal; and a schedule maker operable to obtain, from the storage unit, waiting times at specific places corresponding to the schedule distribution request received by the second receiver, and to make a visiting schedule for the corresponding specific places in ascending order of time taken before entering or using the corresponding specific places based on the obtained waiting times.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is an illustration showing an exemplary configuration of a schedule distribution system according to a first embodiment of the present invention;
FIG. 2 is an illustration showing, in detail, an exemplary structure of an information provider apparatus 30 of FIG. 1;
FIG. 3 is an illustration showing, in detail, an exemplary structure of a server 20 of FIG. 1;
FIG. 4 is an illustration showing, in detail, an exemplary structure of a mobile communications terminal 10 of FIG. 1;
FIG. 5 is an illustration for explaining a concept of a process of detecting the number of people in a queue performed by a number-of-people detector 31 of FIG. 2;
FIG. 6 is a flowchart showing a procedure of a schedule making method according to the first embodiment of the present invention;
FIG. 7 is an illustration showing an exemplary configuration of a specific system to which the first embodiment of the present invention is applied;
FIG. 8 is an illustration showing an exemplary configuration of a schedule distribution system according to a second embodiment of the present invention;
FIG. 9 is an illustration showing, in detail, an exemplary structure of a server 60 of FIG. 8;
FIG. 10 is an illustration showing, in detail, an exemplary structure of a mobile communications terminal 50 of FIG. 8;
FIG. 11 is a flowchart showing a procedure of a schedule making method according to the second embodiment of the present invention; and
FIG. 12 is an illustration showing an exemplary configuration of a specific system to which the second embodiment of the present invention is applied.

### DESCRIPTION OF THE PREFERRED EMBODIMENTS

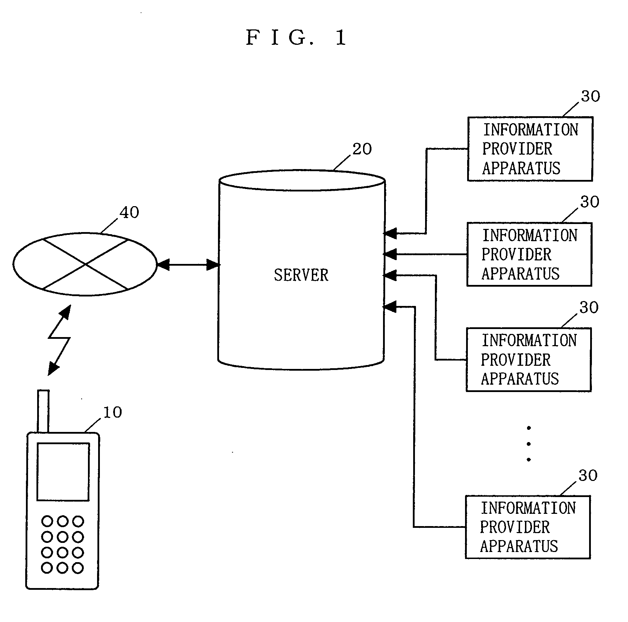

FIG. 1 is an illustration showing an exemplary configuration of a schedule distribution system according to a first embodiment of the present invention. In FIG. 1, the schedule distribution system according to the first embodiment includes a mobile communications terminal 10, a server 20, and a plurality of information provider apparatuses 30. The mobile communications terminal 10 and the server 20 are wirelessly connected to each other via a network 40. The server 20 and the information provider apparatuses 30 form wired or wireless connection with each other.

Each of the above-mentioned components of the schedule distribution system according to the present embodiment is first described below.

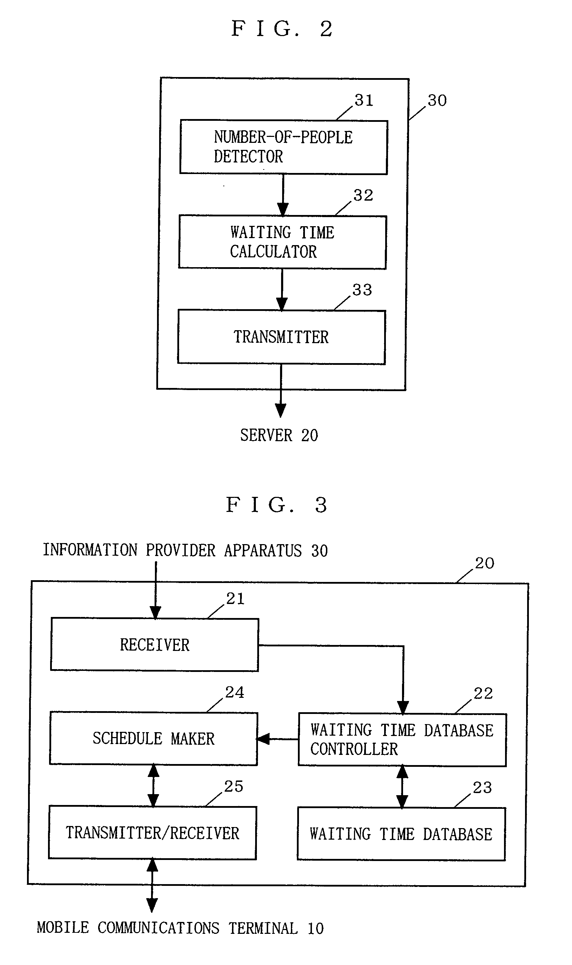

The information provider apparatuses 30 are previously installed in public places, such as movie theaters, restaurants, and parks, or sight-seeing spots (such places are hereinafter referred to as specific places) . As illustrated in FIG. 2, these information provider apparatuses 30 each include a number-of-people detector 31, a waiting time calculator 32, and a transmitter 33.

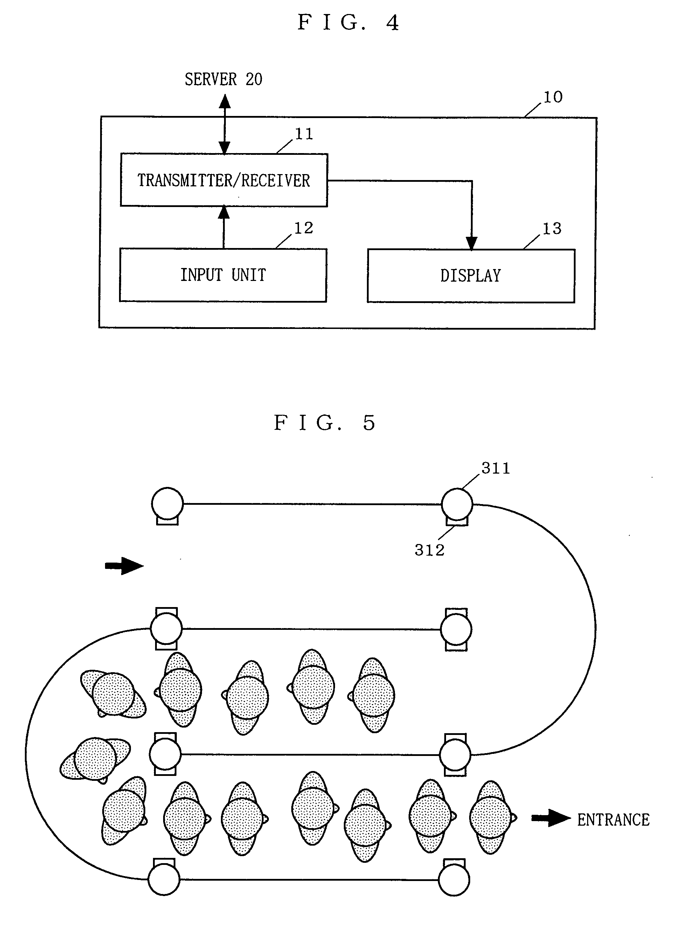

The number-of-people detector 31 detects the number of people waiting in a queue for entering or using the specific place. This detection can be performed by actually observing the length of the queue or by extracting the number of people who made a reservation by entering their names on a waiting list or in a management terminal. To observe the length of the queue, poles 311 for regulating queues and sensors 312 for detecting the existence of people with infrared rays, for example, are placed at an entrance of each specific place (refer to FIG. 5). By knowing which of these sensors 312 is the last to detect the existence of people, it is possible to detect the length of the queue, thereby finding an approximate number of people waiting in the queue. Based on the number of waiting people detected by the number-of-people detector 31, the waiting time calculator 32 calculates an approximate waiting time for a person who would line up at the end of the queue. The waiting time can be easily calculated by previously registering a time required for entering or using the specific place per person, and multiplying the time by the number of waiting people. The transmitter 33 transmits the waiting time calculated by the waiting time calculator 32 to the server 20. Normally, this waiting time is transmitted together with a unique identifier (ID) uniquely identifying the information provider apparatus 30 that calculated the waiting time. However, this identifier is not further described in the present embodiment. The process of transmitting the waiting time is made every time the waiting time becomes varied.

The server 20 manages the waiting time transmitted from each of the information provider apparatuses 30, and makes and distributes a schedule according to a request from the mobile communications terminal 10. As illustrated in FIG. 3, the server 20 includes a receiver 21, a waiting time database controller 22, a waiting time database 23, a schedule maker 24, and a transmitter/receiver 25.

The receiver 21 receives the waiting time transmitted from each of the information provider apparatuses 30. The waiting time database controller 22 stores the waiting time received by the receiver 21 in the waiting time database 23. The waiting time database controller 22 also receives and provides waiting time from the information provider apparatuses 30 required in accordance with a request from the schedule maker 24. The waiting time database 23 stores and manages the waiting time of each information provider apparatus 30. Here, in the waiting time database 23, the information provider apparatuses 30 (that is, the specific places) are preferably classified in advance by area, such as state, city, town, or village. The transmitter/receiver 25 receives a schedule distribution request transmitted from the mobile communications terminal 10. The transmitter/receiver 25 also distributes a schedule made by the schedule maker 24 to the mobile communications terminal 10. The schedule maker 24 receives a current position of the mobile communications terminal 10 requesting schedule distribution. In consideration of the received current position and the waiting times stored in the waiting time database 23, the schedule maker 24 makes a schedule that enables the user of the mobile communications terminal 10 to visit the specific places (that is, the information provider apparatuses 30) in ascending order of waiting time. How to make such a schedule is described further below in detail.

The mobile communications terminal 10 is a movable information terminal typified by a cell phone, a PDA, or a car navigation device. As illustrated in FIG. 4, the mobile communications terminal 10 includes a transmitter/receiver 11, an input unit 12, and a display 13.

The input unit 12 is provided by the user with an instruction input for requesting schedule distribution. This instruction input does not give any specific information about which place to go, but gives rough information about which area to go. Even without such area information, it is possible to determine the area to go from the current position of the mobile communications terminal 10. The transmitter/receiver 11 transmits a schedule distribution request based on the instruction input entered via the input unit 12 to the server 20. The transmitter/receiver 11 also receives a schedule distributed from the server 20, and causes the display 13 to output the schedule. The display 13 shows the schedule received by the transmitter/receiver 11 on a screen.

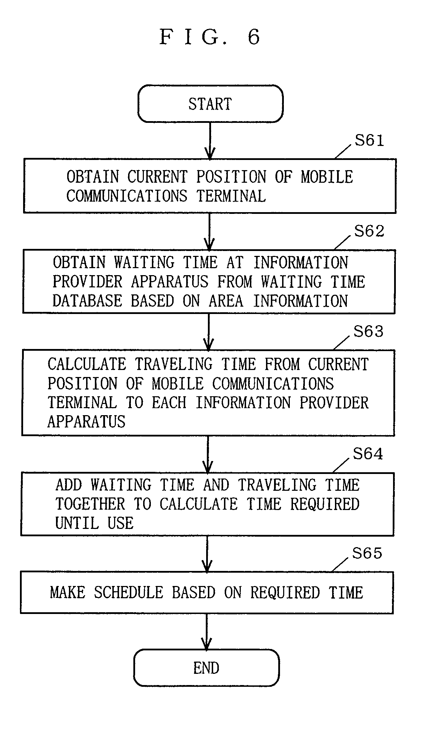

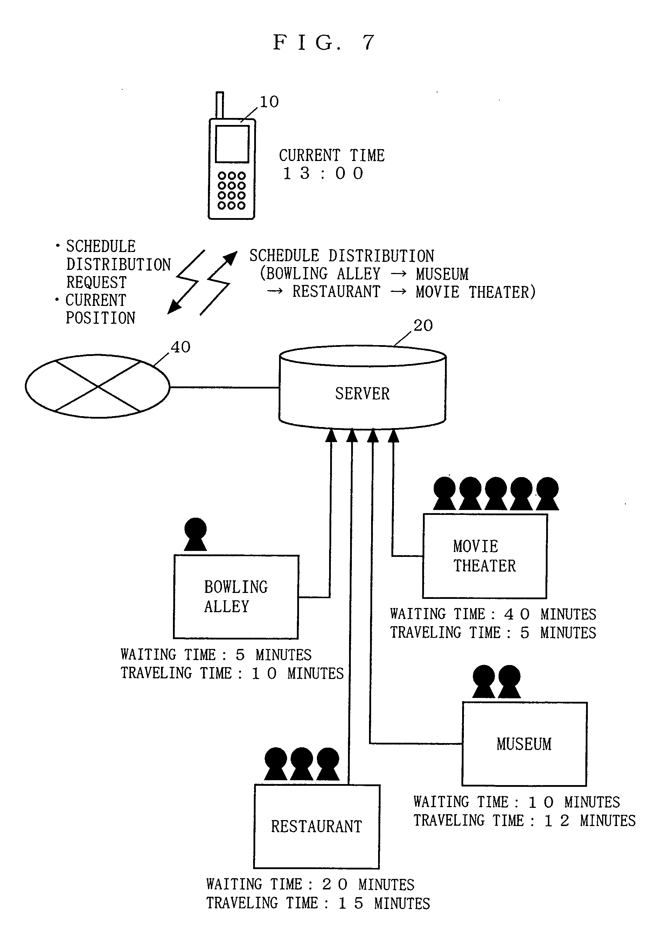

A method of making a schedule performed by the schedule distribution system according to the present embodiment is described below. FIG. 6 is a flowchart for explaining a schedule making procedure performed by the schedule maker 24 of the server 20. FIG. 7 is an illustration showing an exemplary case where a movie theater, a bowling alley, a museum, and a restaurant are selected based on the current position of the mobile communications terminal 10, as specific places having the information provider apparatuses 30 placed therein.

The schedule distribution request transmitted from the mobile communications terminal 10 is received by the transmitter/receiver 25 of the server 20, and is then forwarded to the schedule maker 24. Upon receipt of the schedule distribution request, the schedule maker 24 obtains a current position of the mobile communications terminal 10 (step S61). To obtain the current position, the schedule maker 24 may use information that specifies a base station on the network 40 to which the mobile communications terminal 10 is currently accessing. Alternatively, the current position may be included in the schedule distribution request issued from the mobile communications terminal 10. When Bluetooth (R) is used for communications between the server 20 and the mobile communications terminal 10, radio waves can be transmitted approximately 10 meters. Therefore, upon reception of radio waves from the mobile communications terminal 10, the server 20 can detect that the current position of the mobile communications terminal 10 is within a 10-meter radius of the base station.

The schedule maker 24 obtains, through the waiting time database controller 22, the waiting time of each information provider apparatus 30 stored in the waiting time database 23 (step S62). At this time, the schedule maker 24 obtains waiting time of one or more of the information provider apparatuses 30 classified by area, based on the area specified by the schedule distribution request. The schedule maker 24 then calculates traveling time from the current position of the mobile communications terminal 10 to each specific place (that is, each information provider apparatus 30) whose waiting time has been obtained (step S63). The schedule maker 24 then adds the waiting time and the traveling time together for each information provider apparatus 30 to find the time required until the user actually enters or uses the specific place in which the information provider apparatus 30 is located (step S64). The schedule maker 24 then makes a schedule that enables the user to visit the specific places (that is, the information provider apparatuses 30) in ascending order of waiting time (step S65).

When all of the information provider apparatuses 30 relevant to the area are located close to the current position of the mobile communications terminal 10, the schedule may be made without calculation of traveling time to each of those apparatuses 30.

In the example of FIG. 7, a schedule is made in consideration of the waiting time such that the user will visit the bowling alley first (5 minutes + 10 minutes), the museum second (10 minutes + 12 minutes), the restaurant third (20 minutes + 15 minutes), and then the movie theater fourth (40 minutes + 5 minutes). When the waiting time is not considered, a schedule is made only in consideration of the traveling time. Therefore, the schedule will become as follows : the user will visit the movie theater first (5 minutes), the bowling alley second (10 minutes), the museum third (12 minutes), and the restaurant fourth (15 minutes) .

As described above, according to the schedule distribution system and the schedule making method according to the first embodiment of the present invention, a schedule can be made based on the waiting time of each specific place and the current position of the mobile communications terminal 10, and can be then transmitted to the mobile communications terminal 10. With this, the user of the mobile communications terminal 10 can automatically receive the schedule that enables the user to visit a plurality of specific places in ascending order of waiting time.

Since the waiting time and the traveling time vary with time, the above-described schedule is preferably re-made every time use of a single specific place has been completed.

### (Second embodiment)

In the first embodiment, the schedule maker 24 of the server 20 makes a schedule that enables the user of the mobile communications terminal 10 to visit the specific places in which the information provider apparatuses 30 are located in ascending order of waiting time without consideration of a user's own schedule is provided.

In a second embodiment, a method of making a schedule that enables the user to visit the specific places in which the information provider apparatuses 30 are located in consideration of a user's own schedule at the specific places.

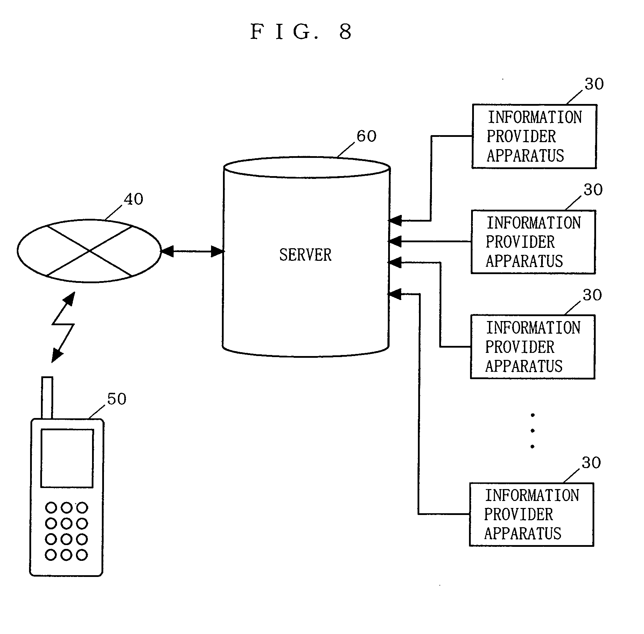

FIG. 8 is an illustration showing an exemplary configuration of a schedule distribution system according to the second embodiment of the present invention. In FIG. 8, the schedule distribution system according to the second embodiment includes a mobile communications terminal 50, a server 60, and the plurality of information provider apparatuses 30. The mobile communications terminal 50 and the server 60 is wirelessly connected to each other via the network 40. The server 60 and the information provider apparatuses 30 form wired or wireless connection with each other.

As illustrated in FIG. 8, the configuration of the schedule distribution system according to the second embodiment of the present invention is different from that according to the first embodiment only in that the mobile communications terminal 50 and the server 60. Descriptions are now made to the schedule distribution system according to the second embodiment, mainly to the above-mentioned difference from the first embodiment.

In the schedule distribution system according to the second embodiment, components identical in structure to those in the first embodiment are provided with the same reference numerals, and are not described herein.

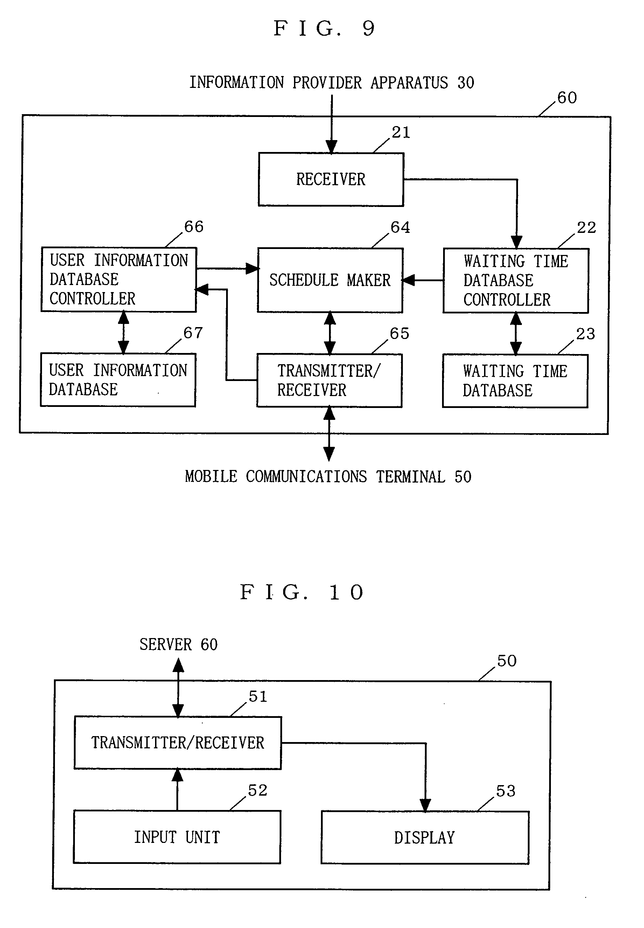

The server 60 manages the waiting time transmitted from the information provider apparatus 30, and makes and distributes a schedule according to a request supplied by the mobile communications terminal 50. As illustrated in FIG. 9, the server 60 includes the receiver 21, the waiting time database controller 22, the waiting time database 23, a schedule maker 64, a transmitter/receiver 65, a user information database controller 66, and a user information database 67.

The transmitter/receiver 65 receives a schedule distribution request transmitted from the mobile communications terminal 50. The transmitter/receiver 65 also distributes the schedule made by the schedule maker 24 to the mobile communications terminal 50. The user information database controller 66 extracts user information included in the schedule distribution request received by the transmitter/receiver 65, and stores the extracted user information in the user information database 67. Also, in response to a request from the schedule maker 64, the user information database controller 66 reads and provides the user information stored in the user information database 67. The user information database 67 stores and manages the user information given by the mobile communications terminal 50. The user information is information that indicates one or more specific places the user desires to visit and intended staying time at each specific place. The user information is, for example, movie-viewing time at a movie theater, or dining time at a restaurant. The schedule maker 64 first obtains the current position of the mobile communications terminal 50 that issued the schedule distribution request. Then, the schedule maker 64 makes a schedule in consideration of the waiting time stored in the waiting time database 23, the user information stored in the user information database 67, and the current position of the mobile communications terminal 50. Here, the schedule is made so as to enable the user to visit the specific places (that is, the information provider apparatuses 30) in ascending order of waiting time. How to make such a schedule is described further below in detail.

The mobile communications terminal 50 is a movable information terminal typified by a cell phone, a PDA, or a car navigation device. As illustrated in FIG. 10, the mobile communications terminal 50 includes a transmitter/receiver 51, an input unit 52, and a display 53.

The input unit 52 is provided by the user with an instruction input for requesting schedule distribution. This instruction input includes the area information as described in the first embodiment, and also the above-described user information. The transmitter/receiver 51 transmits a schedule distribution request including the user information based on the instruction entered via the input unit 52 to the server 60. The transmitter/receiver 51 also receives a schedule distributed from the server 60, and causes the display 53 to output the schedule. The display 53 shows the schedule received by the transmitter/receiver 51 on a screen.

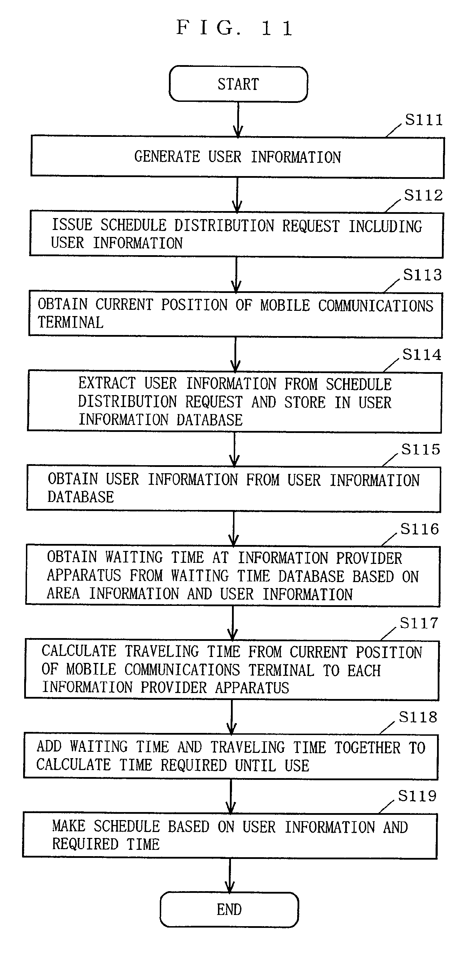

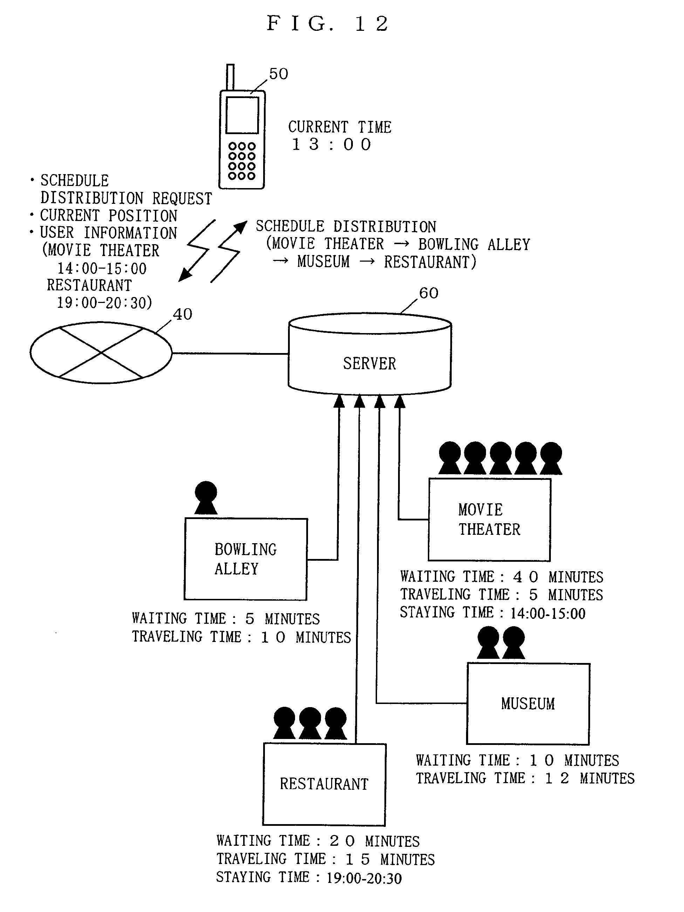

A method of making a schedule performed by the schedule distribution system according to the second embodiment is described below. FIG. 11 is a flowchart for explaining a schedule making procedure performed by the schedule maker 64 of the server 60. FIG. 12 is an illustration showing an exemplary case where a movie theater, a bowling alley, a museum, and a restaurant are selected based on the current position of the mobile communications terminal 50 and the current time, as specific places having the information provider apparatuses 30 placed therein.

Prior to schedule distribution, the mobile communications terminal 50 generates user information (step S111). For this purpose, the mobile communications terminal 50 first obtains a list of the information provider apparatuses 30 from the server 60. Based on the list, the user determines the specific places he or she desires to visit, intended staying time at each of those places, priority for visiting the places, and going-home time, for example, to cause the mobile communications terminal 50 to generate user information in accordance with the user's determination. Note herein that the priority is determined only by user's preference, and does not reflect optimal order of actual visiting. Then, the mobile communications terminal 50 issues a schedule distribution request including the user information to the server 60 (step S112).

The schedule distribution request transmitted from the mobile communications terminal 50 is received by the transmitter/receiver 65 of the server 60, and is then forwarded to the schedule maker 64 and the user information database controller 66. Upon receipt of the schedule distribution request, the schedule maker 64 obtains a current position of the mobile communications terminal 50 (step S113). The user information database controller 66 extracts the user information included in the schedule distribution request, and then stores the extracted user information in the user information database 67 (step S114). Then, the schedule maker 64 obtains, via the user information database controller 66, the user information stored in the user information database 67 (step S115). The schedule maker 64 then obtains, from the waiting time database 23, waiting time at each of the information provider apparatuses 30 that are located within the area given by the schedule distribution request and are included in the specific places designated by the user information (step S116). Here, such waiting time is obtained via the waiting time database controller 22. Furthermore, the schedule maker 64 calculates traveling time from the current position of the mobile communications terminal 50 to each specific place in which each information provider apparatus 30 is located (step S117). The schedule maker 64 adds the waiting time and the traveling time together for each information provider apparatus 30 to calculate time required for entering or using each specific place (that is, each information provider apparatus 30) (step S118). The schedule maker 64 then makes a schedule that enables the user to visit the specific places in ascending order of waiting time required before entering or using those place, with utmost consideration given to the specific places and the intended staying time thereat designated by the user information (step S119).

In the example of FIG. 12, a schedule is made in consideration of the user information as well as the waiting time such that the user will visit the movie theater first (40 minutes + 5 minutes; staying time 14:00-15:00), the bowling park second (5 minutes + 10 minutes), the museum third (10 minutes + 12 minutes), and then the restaurant fourth (20 minutes + 15 minutes; staying time 19:00-20:30).

Note that the user information stored in the user information database 67 may be deleted if no longer necessary after making of the schedule has been completed. This deletion can be automatically performed based on a decision made by the user information database controller 66, or can be performed by the user information database controller 66 upon request from the mobile communications terminal 50.

As described above, according to the schedule distribution system and the schedule making method according to the second embodiment of the present invention, a schedule can be made based on the user information as well as the waiting time at the specific places and the current position of the mobile communications terminal 50 for transmission to the mobile communications terminal 50. With this, the user of the mobile communications terminal 50 can automatically receive a schedule that enables the user to visit a plurality of specific places in ascending order of waiting time and also in consideration of his or her own schedule.

In the first and second embodiments, the above-described system covers a wide area including a plurality of specific places. This is not meant to be restrictive. The present invention can be applied also to a system that covers a small area, such as a theme park, including a plurality of attractions. In this case, the user can get information about desired attractions. At an attraction operator's side, it is possible to estimate the crowd for each attraction, thereby achieving an efficient attraction operation by, for example, allocating more staff to attractions expected to be crowded.

Furthermore, the schedule making method described in the first and second embodiments is typically achieved by predetermined program data stored in a storage device (ROM, RAM, or a hard disk, for example) and capable of executing the above-described procedure being interpreted by a CPU. In this case, the program data may be loaded into the storage device via a recording medium such as CD-ROM or a flexible disk, or may be executed directly on the recording medium.

While the invention has been described in detail, the foregoing description is in all aspects illustrative and not restrictive. It is understood that numerous other modifications and variations can be devised without departing from the scope of the invention.

## Claims

1. A schedule distribution system for making a visiting schedule for a plurality of specific places, and distributing the schedule to a predetermined terminal, comprising:
a mobile communications terminal (10, 50) operable to issue a request for distribution of the visiting schedule for the plurality of specific places;
a plurality of information provider apparatuses (30) each placed at each of the specific places, the information provider apparatuses (30) operable to transmit a waiting time for entering or using the specific place; and
a server (20, 60) operable to collect the waiting time from each of the information provider apparatuses (30), to make a schedule based on the waiting time, upon the request from the mobile communications terminal (10, 50), and to distribute the schedule to the mobile communications terminal (10, 50).

2. The schedule distribution system according to claim 1, wherein
each of the information provider apparatuses (30) includes:
a number-of-people detector (31) operable to detect the number of people waiting to enter or use the specific place;
a waiting time calculator (32) operable to calculate the waiting time required for entering or using the specific place from the number of people detected by the number-of-people detector (31); and
a transmitter (33) operable to transmit the waiting time calculated by the waiting time calculator (32) to the server (20),
the server (20, 60) includes:
a first receiver (21) operable to receive the waiting time transmitted from each of the information provider apparatuses (30);
a storage unit (22, 23) operable to store the waiting time received by the first receiver (21);
a second receiver (25, 65) operable to receive a schedule distribution request from the mobile communications terminal (10, 50);
a schedulemaker (24, 64, 66, 67) operable to obtain, from the storage unit (22, 23), a waiting time at each of specific places corresponding to the schedule distribution request received by the second receiver (25, 65), and to make a visiting schedule for the corresponding specific places in ascending order of time taken before entering or using the corresponding specific places based on the obtained waiting time; and
a transmitter (25, 65) operable to transmit the schedule made by the schedule maker (24, 64, 66, 67) to the mobile communications terminal (10, 50), and
the mobile communications terminal (10, 50) includes:
a request transmitter (11, 51) operable to transmit the schedule distribution request to the server (20, 60);
a receiver (11, 51) operable to receive the schedule made by the server (20, 60); and
a display (13) operable to display the schedule received by the receiver (11, 51).

3. The schedule distribution system according to claim 2, wherein
the schedule maker (24) makes a schedule that enables a user to visit the corresponding specific places in ascending order of the waiting time.

4. The schedule distribution system according to claim 2, wherein
the schedule maker (24) obtains a current position of the mobile communications terminal (10) transmitting the schedule distribution request, further calculates a traveling time from the current position to each of the corresponding specific places, and then makes a schedule that enables a user to visit the corresponding specific places in ascending order of a sum of the waiting time and the traveling time.

5. The schedule distribution system according to claim 2, wherein
the mobile communications terminal (10) transmits the schedule distribution request including area information indicative of an area where a specific place desired for scheduling is located, and
the schedule maker (24) obtains a waiting time of each of specific places corresponding to the area information from the storage unit (22, 23), and makes a schedule that enables a user to visit the corresponding and desired specific places in ascending order of the waiting time.

6. The schedule distribution system according to claim 2, wherein
the mobile communications terminal (10) transmits the schedule distribution request including area information indicative of an area where a specific place desired for scheduling is located, and
the schedule maker (24) obtains a waiting time of each of specific places corresponding to the area information from the storage unit (22, 23), obtains a current position of the mobile communications terminal (10) transmitting the schedule distribution request, further calculates a traveling time from the current position to each of the corresponding and desired specific places, and makes a schedule that enables a user to visit the corresponding and desired specific places in ascending order of a sum of the waiting time and the traveling time.

7. The schedule distribution system according to claim 2, wherein
the mobile communications terminal (50) transmits the schedule distribution request including user information indicative of an intended staying time at a specific place desired for scheduling, and
the schedule maker (64, 66, 67) further obtains a waiting time at each of specific places corresponding to the user information from the storage unit (22, 23), and makes a schedule that enables a user to visit the corresponding and desired specific places in ascending order of the waiting time and in consideration of the user information.

8. The schedule distribution system according to claim 2, wherein
the mobile communications terminal (50) transmits the schedule distribution request including user information indicative of an intended staying time at a specific place desired for scheduling, and
the schedule maker (64, 66, 67) further obtains a waiting time at each of specific places corresponding to the user information from the storage unit (22, 23), obtains a current position of the mobile communications terminal (50) transmitting the schedule distribution request, further calculates a traveling time from the current position to each of the corresponding and desired specific places, and makes a schedule that enables a user to visit the corresponding and desired specific places in ascending order of a sum of the waiting time and the traveling time and in consideration of the user information.

9. A method of making a visiting schedule for a plurality of specific places based on predetermined information given by the specific places, comprising the steps of:
detecting the number of people waiting for entering or using the specific places;
calculating waiting times required to enter or use the specific places;
extracting waiting times at specific places corresponding to a schedule making request from the calculated waiting times from the detected number of people; and
making a schedule in ascending order of time taken before entering or using the corresponding specific places based on the extracted waiting times.

10. The schedule making method according to claim 9, wherein
in the schedule making step, a schedule is made to enable a user to visit the corresponding specific places in ascending order of the waiting time.

11. The schedule making method according to claim 9, wherein
in the schedule making step, a current position of a terminal transmitting the schedule making request is obtained, a traveling time from the current position to each of the corresponding specific places is calculated, and a schedule is made to enable a user to visit the corresponding specific places in ascending order of a sum of the waiting time and the traveling time.

12. The schedule making method according to claim 9, wherein
when the schedule making request includes area information indicative of an area where a specific place desired for scheduling is located,
in the schedule making step, a waiting time at each of specific places corresponding to the area information is obtained from the calculated waiting times, and a schedule is made to enable a user to visit the corresponding and desired specific places in ascending order of the waiting time.

13. The schedule making method according to claim 9, wherein
when the schedule making request includes area information indicative of an area where a specific place desired for scheduling is located,
in the schedule making step, a waiting time at each of specific places corresponding to the area information is obtained from the calculated waiting times, a current position of a terminal transmitting the schedule making request is obtained, a traveling time from the current position to each of the corresponding and desired specific places is further calculated, and a schedule is made to enable a user to visit the corresponding and desired specific places in ascending order of a sum of the waiting time and the traveling time.

14. The schedule making method according to claim 9, wherein
when the schedule making request includes user information indicative of an intended staying time at a specific place desired for scheduling,
in the schedule making step, a waiting time at each of specific places corresponding to the user information is further obtained from the calculated waiting times, and a schedule is made to enable a user to visit the corresponding and desired specific places in ascending order of the waiting time and in consideration of the user information.

15. The schedule making method according to claim 9, wherein
when the schedule making request includes user information indicative of an intended staying time at a specific place desired for scheduling,
in the schedule making step, a waiting time at each of specific places corresponding to the user information is further obtained from the calculated waiting times, a current position of a terminal transmitting the schedule making request is obtained, a traveling time from the current position to each of the corresponding and desired specific places is further calculated, and a schedule is made to enable a user to visit the corresponding and desired specific places in ascending order of a sum of the waiting time and the traveling time and in consideration of the user information.

16. A server that generates a visiting schedule for a plurality of specific places based on waiting times at the specific places to enter or use, the waiting times transmitted from a plurality of information provider apparatuses (30) each placed in each of the specific places, comprising:
a first receiver (21, 61) operable to receive the waiting times transmitted from the information provider apparatuses (30);
a storage unit (22, 23) operable to store the waiting times received by the first receiver (21, 61);
a second receiver (25, 65) operable to receive a schedule distribution request from a predetermined terminal (10, 50); and
a schedule maker (24, 64) operable to obtain, from the storage unit (22, 23), waiting times at specific places corresponding to the schedule distribution request received by the second receiver (25, 65), and to make a visiting schedule for the corresponding specific places in ascending order of time taken before entering or using the corresponding specific places based on the obtained waiting times.
